# EUROPEAN PATENT SPECIFICATION

(11) **EP 2 248 237 B1**
(45) Date of publication and mention of the grant of the patent: **31.07.2013**
(21) Application number: 09707824.0
(22) Date of filing: 26.01.2009
(51) Int. Cl.: H02G 15/18, H02G 15/188

(54) **EXTERNAL SLEEVE**
AUSSENHÜLLE
MANCHON EXTERNE

(30) Priority: 04.02.2008 DE 102008007405
(43) Date of publication of application: 10.11.2010
(73) Proprietor: Tyco Electronics Raychem GmbH, 85521 Ottobrunn (DE)
(72) Inventor: SIMONSOHN, Thilo, 81735 Munich (DE)
(74) Representative: Grünecker, Kinkeldey, Stockmair & Schwanhäusser
(86) International application number: PCT/EP2009/050830
(87) International publication number: WO 2009/098131

(56) References cited:
- EP-A- 1 843 442
- WO-A-00/01048
- US-A1- 2002 070 046

## Description

The present invention relates to an external sleeve, to a method for producing an external sleeve and to a method for joining two or more cable ends.

An earth cable is a power cable or telecommunications cable which is laid in the ground and has a particularly robust external protection (sheath) which prevents the cable from being destroyed by chemical and mechanical influences in the ground by water or small animals (rodents) which live in the ground and by fungi.

To provide a mechanical protection, earth cables are occasionally also laid in a layer of sand in the ground so that sharp-edged stones cannot damage the cable when the ground is stressed (for example by vibrations of nearby rail or road traffic). Earth cables for voltages below 100 kV can be produced in a multi-polar configuration, while single-pole configurations (single-conductor cables) are used for higher voltages.

Today, cables which have a plastics material sheath are mainly used for voltages up to 200 kV, while cables having an insulation of oil-impregnated paper are also used for these and higher voltages. At present in Germany, lines having voltages below 100 kV are configured in principle as earth cables in newly constructed residential or industrial areas. The power lines for supplying the houses in many older residential areas are also configured as earth cables. In general, earth cables are laid at a depth of 60 cm (80 cm in a road area). Plastics material sheets are used in addition to warning tape to protect the cables from being punctured and exposed by digging.

Earth cables have some advantages compared to overhead lines. They are protected most effectively from damage, caused inter alia by adverse weather conditions such as storms, hail and lightning. In addition, their electromagnetic compatibility is better. However, a disadvantage is the higher cost.

A sleeve is a construction element for joining two cables in an interruption-free manner or for splitting a cable, for example when a branch of a power cable has to be guided to a house.

Depending on the purpose of use, a distinction is made between coupling sleeves or straight-through joints and branch sleeves which occasionally also differ in their construction. Used as external sleeves are, inter alia, cast resin sleeves, shrunk-on sleeves (heat and cold shrink sleeves) and sleeves in the slide-on, method, various types of sleeve possibly being used in power engineering in various voltage planes, such as low voltage and medium voltage. In the low voltage range (< 1000 V), heat shrink and cold shrink sleeves are used, while sleeves in the slide-on method as well as heat and cold shrink sleeves are used in the medium voltage range.

Different types of internal sleeves are shown in longitudinal section in Figs. 16, 17 and 18. Fig. 16 shows a heat shrink internal sleeve, while Fig. 17 shows an internal sleeve for the slide-on method. Fig. 18 shows a cold shrink internal sleeve on a spiral.

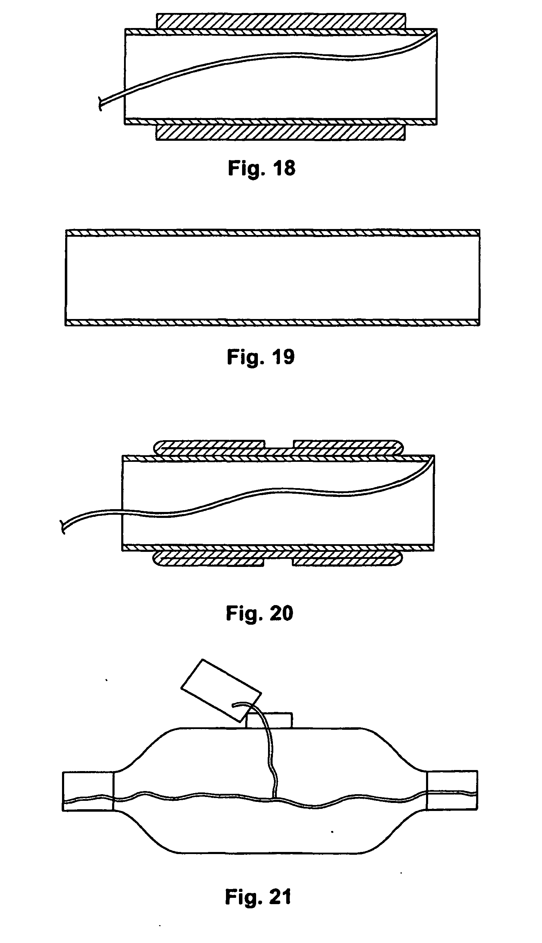

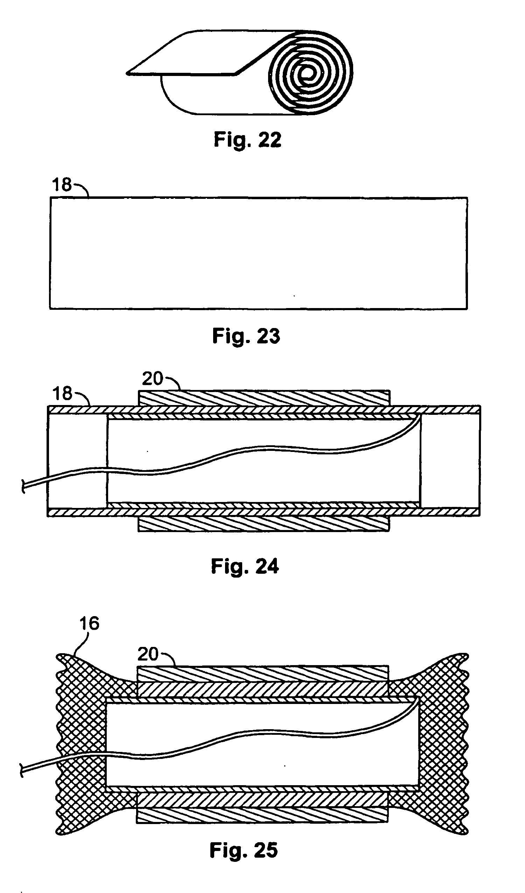

Figs. 19 to 22 show various external sleeves in longitudinal section. Fig. 19 shows a heat shrink external sleeve, while Fig. 20 shows a cold shrink external sleeve in which the tube is folded back, so that the parking length of the assembly is shorter. Fig. 21 shows a housing of a cast resin external sleeve and Fig. 22 shows that an external sleeve can also be applied in a winding method using a tape, i.e. an adhesive tape.

For maximum voltage cables, a prefabricated sleeve is used which is completely dry, i.e. it does not contain gaseous or fluid substances and does not require any maintenance. For this reason, the most important electrical parts can be pre-checked in the factory. This accelerates the on-site assembly and reduces the risks associated therewith.

The sleeve consists of two slip-on silicone field control elements, filling band, thick-walled insulating tubes, an outer conductive combi-tube, a copper gauze shielding and a thick-walled shrunk-on tube as the outer protection.

Medium voltage cables, and thus single-conductor cables will be discussed for the most part in the following. In this case, a fold-down outer tube is preferably applied to the sleeve body.

For medium voltage cables and lines insulated with plastics materials, there are external sleeves in the cold shrink, slip-on and heat shrink methods. Coupling sleeves are used when cables are laid in the ground, in cable shafts and under open air conditions. The cables can have firmly welded or graphitised outer conducting layers or outer conducting layers which can be stripped off.

Protection against permeation is important for cables laid underground. Substantial impermeability to water vapour is of interest here, since the copper gauze, the earth wires and the shielding wire connections are to be protected against corrosion, otherwise they lose their contactability. Moreover, the water absorption of the sleeve body which is produced from sheets and thus absorbs considerable amounts of water, is to be reduced.

Today, the assembly of sleeves is part of the routine work of laying medium voltage cables. A method is required which affords maximum application reliability and short assembly times.

The joining of the prime conductor and the shielding wires is produced using screw connections and crimp connectors. Shearing screws having a definite torque simplify this step and ensure an excess-free tear-off for different conductor cross sections. The field control at the end of the cable shielding as well as via the connector is carried out, for example by means of geometric field control elements which are integrated into the one-piece sleeve in the domain of the medium voltage method. The insulation and external field boundary is undertaken by a sleeve body consisting of high-quality silicone rubber or EPDM rubber (ethylene propylene diene copolymer). A choice of a heat shrink tube or an elastomeric protective tube, a tube in the winding method or cast resin ensures the outer protection of the sleeve.

The conductor connection is produced with the screw connector. The sleeve body can then be pushed into its final position. The sleeve body can be easily parked over the outer sheath of the cable. An adhesive-coated heat shrink tube or an elastomeric tube, for example, can be provided for the external protection of the sleeve.

An all-in-one (one-piece) cold shrink sleeve is constructed as follows: a supporting element or supporting spiral, for example a spiral hold-out, holds the diameter of the expanded sleeve body. In order to facilitate the installation process and to make it reliable, a copper gauze tube or stocking is used to join the shielding wires, which tube or stocking is to be previously applied onto the expanded body, the preferably tin-plated copper wires having a minimum cross section.

The EPDM of the protective tube has a finite water vapour permeability which, in the case of cables laid underground, can result in corrosion damage to the metal and water absorption by the sleeve body. Water is able to penetrate through the rubber material of the outer tube (permeation) or through a leaky connection between the rubber tube and the outer sheath of the cable. A mastic (sealing rubber/sealing compound) is almost always used on the outer sheath. This is very tacky and, through the contact pressure, increases the diameter of the cable.

Underground cables and sleeves are exposed to a considerable amount of pressure. This pressure is exerted in the form of stones, sharp edges and vibrations on the outer skin, formed from soft rubber, of the cold shrink sleeve, whose wall thickness is reduced thereby. Microbes are a further source of risk. Many sleeves have been laid which have a defective outer tube, which may go unnoticed in day-to-day use. This can result, for example in the metallic wires in the sleeve corroding and in the contacts becoming impaired. However, the use of all-in-one sleeves is still desired, as the above-described advantages of these sleeves will be retained.

Therefore, the object of the invention is to reduce the access of fluid to the sleeve body or to the point where the shielding wires join one another, in particular if this joining point is realised by a scroll spring. In addition, the simple use is to be retained, and the production of the sleeve should not become substantially more expensive.

This object is achieved by the subject-matter of the independent claims 1-14.

Advantageous developments of the present invention are the subject-matter of a number of sub-claims.

In the following, examples are referred to which are not covered by the appended claims, but which are helpful for the understanding of the claimed invention. An external sleeve according to the preamble of claim 1 is known from EP-A-1843 442

The advantage of a sleeve being used in a single-piece assembly is that the installation can be performed in a relatively simple and fast manner.

The use of the cold shrink method has the advantage that digging in the road does not have to involve a heat source, which entails potential risks, and also fewer tools are needed. In this case, the greatest source of errors is the competence and experience of the installers, whose safety and quality of training must also be considered.

The sleeve according to the invention can also advantageously be used in the heat shrink method, which allows more flexibility.

The integration of the shielding layer in the barrier layer has the advantage that the sleeve consists of fewer components, which makes the production and installation simpler and more reliable and leads to a reduction in costs.

If the barrier layer is arranged under the shielding layer, the shielding layer forms a physical protective layer for the sleeve body. This is important, for example, if a digger or a spade should strike the external sleeve. Moreover, it is advantageous that a cushioning and superficial protection of the sleeve body is then provided with respect to the shielding layer, which is otherwise pushed with great force through the extended outer tube into the surface, which relates above all to the still uninstalled state.

If the barrier layer is applied over the shielding layer, this barrier layer also protects the protective tube against possible sharp edges, kinks and bends in the wires to the shielding layer. Protection against incorrect handling and possible manufacturing faults is also provided hereby.

If the barrier layer consists of metal, possibly with a plastics material coating, the minimum cross section of the wires in the shielding layer can be increased, and thus an improved shielding can be achieved. In this case, two of these shielding layers could be used to ensure a greater flexibility. If only one shielding layer were to be used, this would be relatively rigid.

A soft layer under the outer tube can act as a shock absorber and improves the impact resistance of the outer tube. The soft layer also helps protect against sharp edges.

The shielding layer advantageously consists of multilayered plastics material if the metal is omitted, to ensure the flexibility and water tightness of the external sleeve.

It is advantageous for the shielding layer to consist of copper gauze, as this expands easily, up to more than 200 %, and is flexible.

If the shielding layer consists of at least two metal foils, this has the advantage that the shielding layer is more flexible. This means that cable bends of a relatively small radius are allowed and it is possible to avoid breaks.

The formation of the shielding layer as an undulating profile allows it to expand radially.

The invention is described in more detail in the following with reference to the the drawings. Similar or corresponding details in the Figures are provided with the same reference numerals. In the Figures:

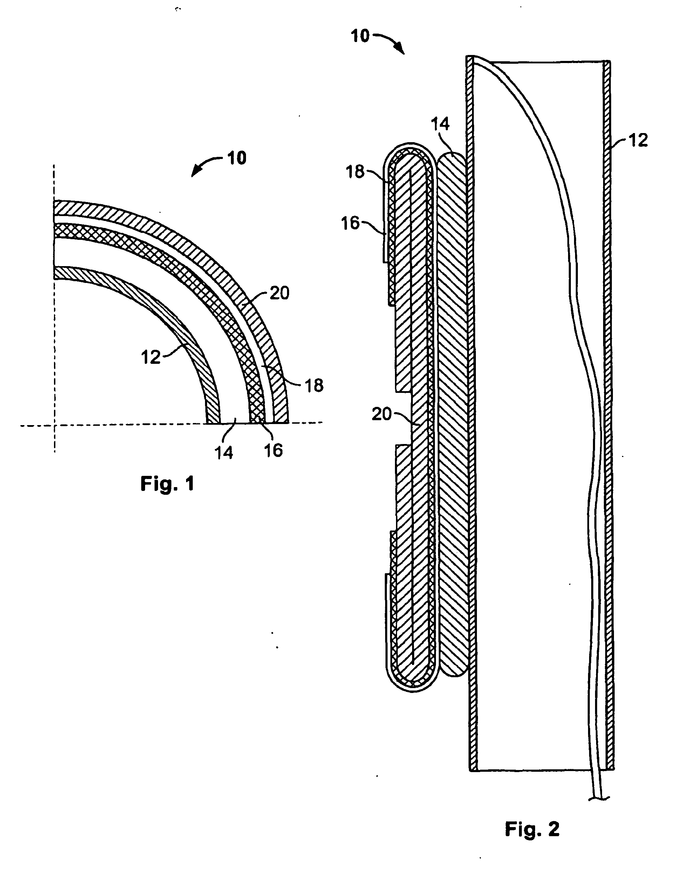

Fig. 1 is a cross sectional view of an external sleeve;
Fig. 2 is a longitudinal sectional view of the external sleeve; ;

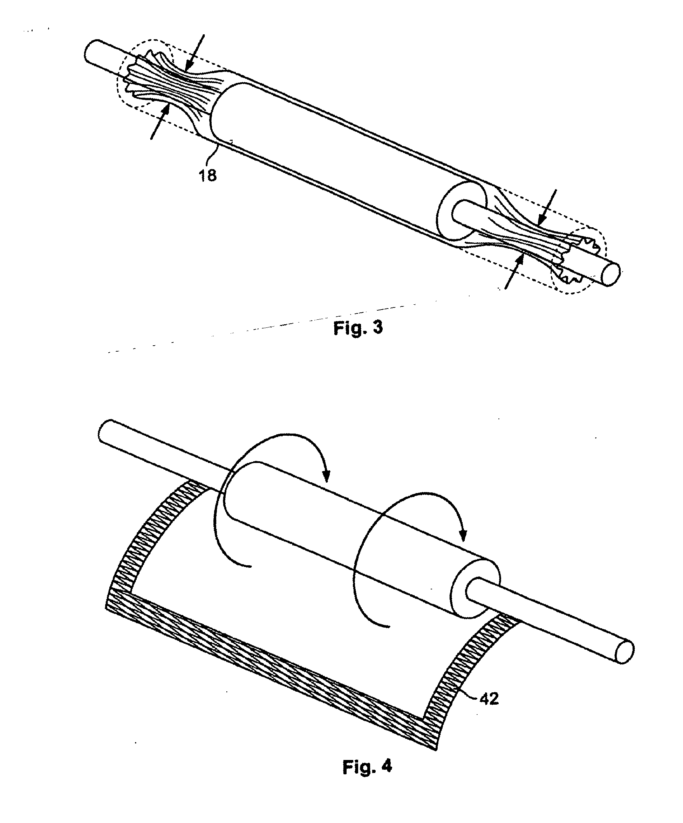

Fig. 3 shows the external sleeve with a reduced-water-permeability layer;
Fig. 4 shows one example of an external sleeve;

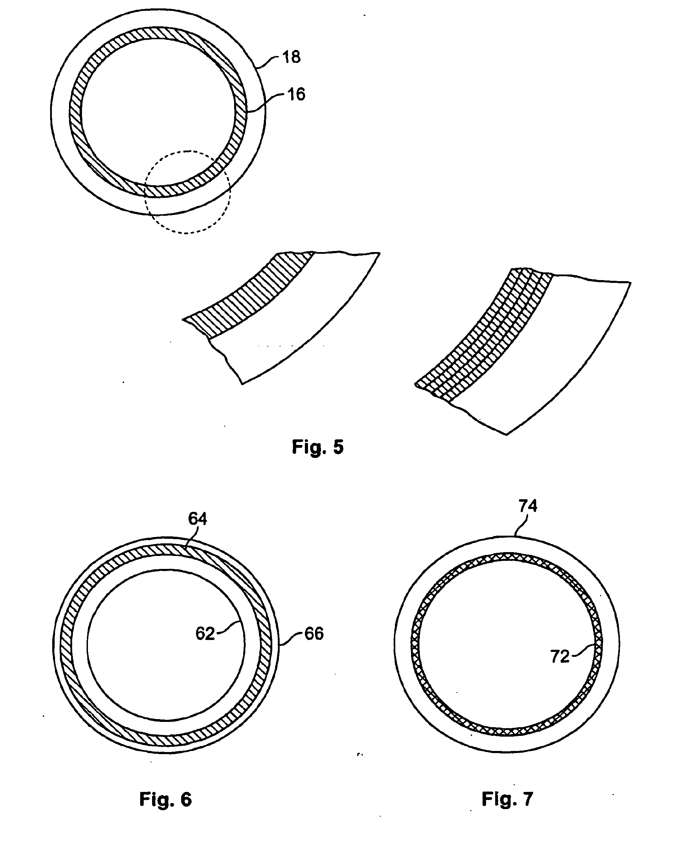

Fig. 5 shows further examples of the external sleeve according to the invention in cross section;
Fig. 6 shows a further example of an external sleeve in cross section;
Fig. 7 shows a further example of an external sleeve in cross section;

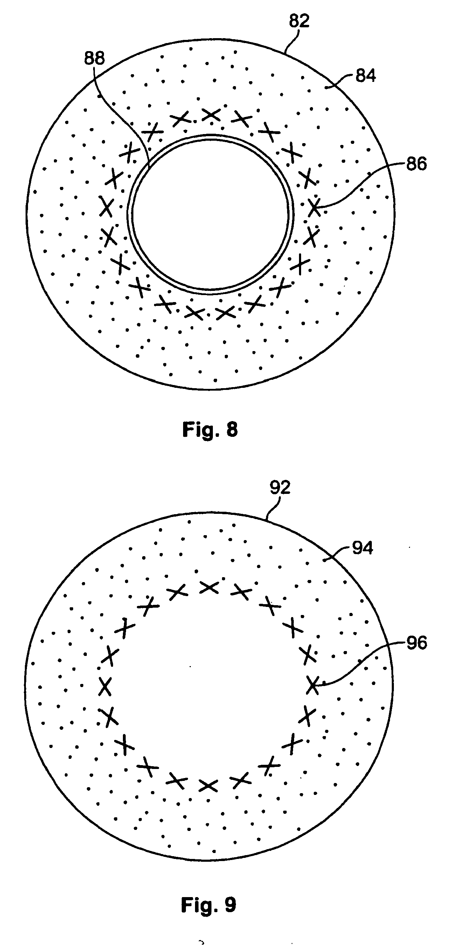

Fig. 8 shows a further example of an external sleeve in cross section;
Fig. 9 shows a further example of an external sleeve in cross section;

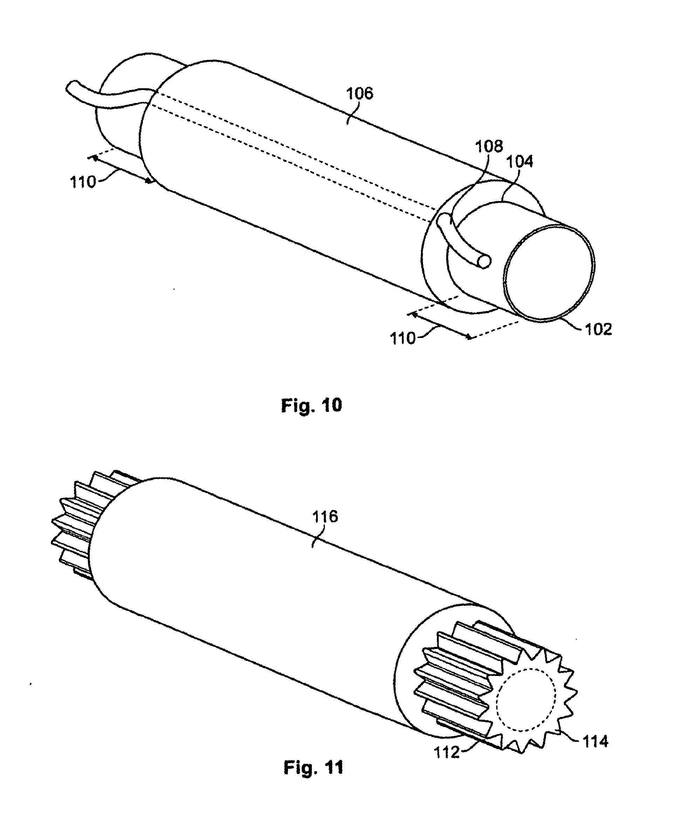

Fig. 10 shows a further example of an external sleeve;
Fig. 11 shows a further example of an external sleeve;

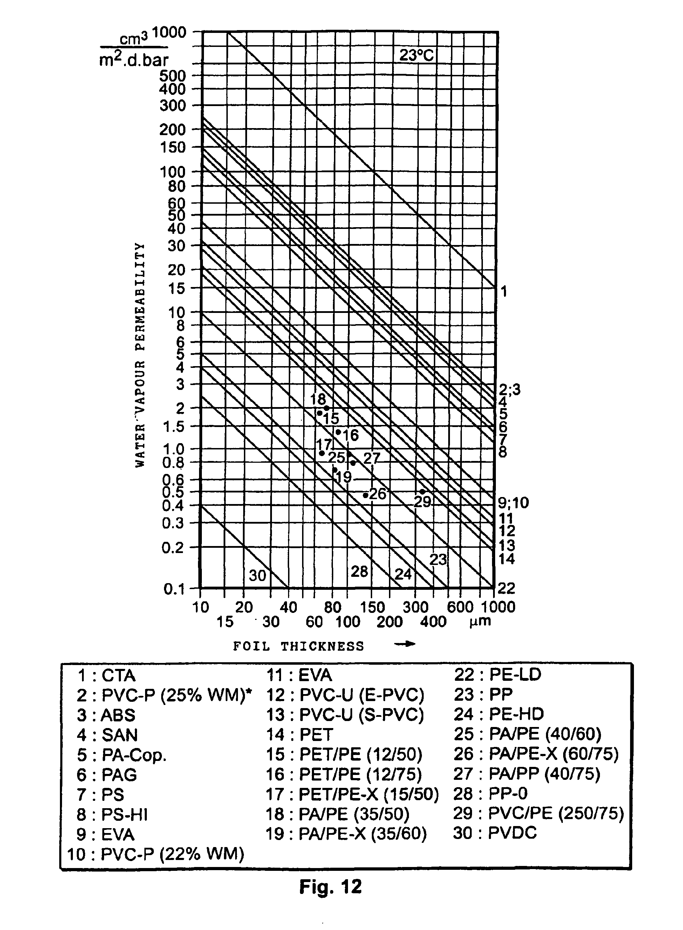

Fig. 12 shows the water vapour permeability as a function of the foil thickness;

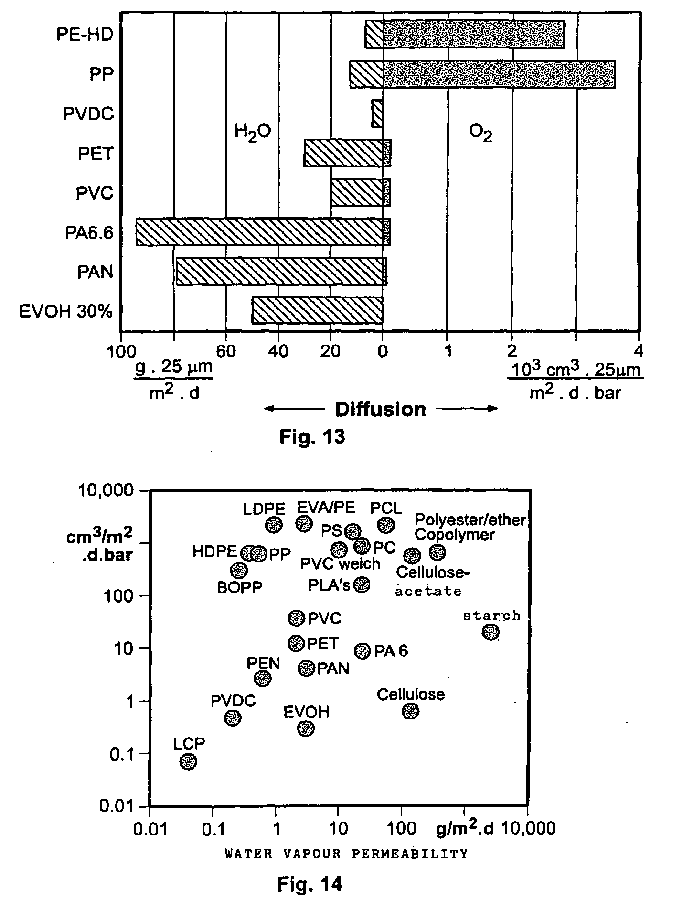

Fig. 13 shows oxygen and water vapour barrier values of current plastics materials;
Fig. 14 shows oxygen and water vapour permeability of selected polymers;

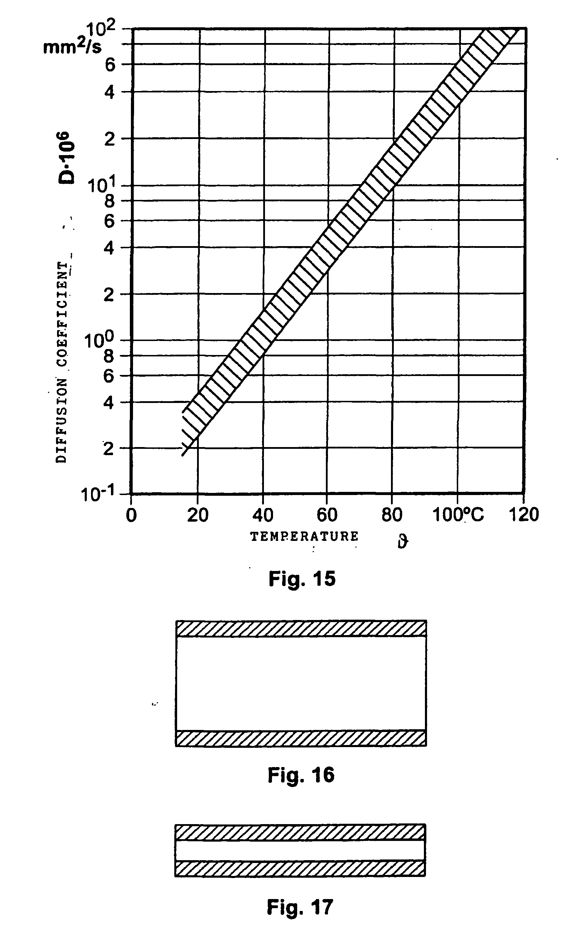

Fig. 15 shows the temperature dependency of a diffusion coefficient;
Fig. 16 shows a heat shrink internal sleeve;
Fig. 17 shows an internal sleeve in the slip-on method;
Fig. 18 shows an internal sleeve in the cold shrink method on a spiral;
Fig. 19 shows a heat shrink external sleeve;
Fig. 20 shows a cold shrink external sleeve with a folded-back tube;
Fig. 21 shows an external sleeve in the cast resin method with a housing;
Fig. 22 shows an external sleeve in the winding method with tape;
Fig. 23 shows a foil tube for use with all types of external sleeves;
Fig. 24 shows a thick-walled tube with a thin-walled foil pre-expanded on a spiral hold-out; and
Fig. 25 shows a thick-walled reduced-permeation tube with an integrated copper gauze pre-expanded on a spiral hold-out.

The present invention is described with respect to a cold shrink all-in-one sleeve for medium voltage cables, although the application is not restricted to this case. The invention could be used just as well in the low or high voltage ranges, as well as for heat shrink methods and for the slip-on method. The external sleeves can be connections of power cables as well as telecommunication cables.

Fig. 1 shows a cross section of a coupling sleeve 10 which clarifies the construction of the sleeve. In the very centre is a supporting element 12 which is surrounded by a sleeve body 14. Positioned over the sleeve body 14 is an electrical shielding, for example a copper gauze 16 which in turn is surrounded by a barrier layer, for example a permeation protection foil 18. The outer tube 20 surrounds this construction.

The supporting element 12 supports the further layers i.e. sleeve body 14, electrical shielding 16, barrier layer 18 and outer tube 20, of the sleeve 10 in the expanded state. This supporting element 12 is preferably configured as a spiral hold-out or supporting spiral, but can also consist of other principles, in particular two parts of a supporting tube which can be pulled apart. The supporting element 12 only supports the sleeve in the delivery state, because said supporting element is removed as soon as the ends of the cable have been joined.

The sleeve body 14 consisting of elastomer (for example silicone or EPDM) which insulates the conductor of the single-conductor cable is also part of the prefabricated sleeve 10. The sleeve body 14 also provides for the field control and supports the outer conducting layer. The thickness and configuration of the sleeve body 14 depends on the specification of the cables to be joined.

To join the shielding wires of the cable ends, there is provided an electrical shielding, for example a copper gauze tube or stocking 16 in the construction of the sleeve. Said electrical shielding is fitted around the sleeve body 14. The copper wires which are preferably tin plated have an overall minimum cross section. This could be a matter of a copper wire with a large cross section, or for example forty copper wires with a small cross section, as the total of all the cross sections is used for this purpose. For joining the shielding wires, tin-plated copper wires of a maximum diameter of 3 mm, preferably from 0.5 to 1.5 mm are used, or commercially available wire braid (diameter reduced according to the number) is used.

The outer tube 20, also called an external sleeve, is more often than not produced from EPDM rubber (ethylene-propylene-diene rubber) for use in the cold shrink method. EPDM rubber is a terpolymer elastomer (rubber). The saturated skeletal structure leads to classical characteristics, for example a high weathering and moisture resistance and ozone resistance, as well as a high thermal resistance. It is used because of its high resilience and good chemical resistance. EPDM rubber has high tear strength. As a result of being stored in a greatly expanded state (approximately 200 % expansion, i.e. three times the diameter), the rubber tube loses approximately 30 to 50 % of its original diameter. The tube can also be produced from silicone which has relatively high water permeability and a relatively low tear strength.

Fig. 23 shows the principle of a barrier layer 18 which is configured as a foil tube. This foil tube is provided separately and drawn over the interior sleeve and/or shielding wire couplings before the external sleeve is installed. The use of this foil tube is possible with all types of external sleeve.

The barrier layer 18 which is of a reduced fluid permeability, is positioned between the sleeve 14 and the outer tube 20. This barrier layer can be a single or multilayer plastics material, or a metal foil which is coated with plastics material. According to the invention to the invention as claimed, the barrier layer consists of a multilayer plastics material.

Fig. 24 shows a thick-walled tube with a thin-walled foil or coating which has been pre-expanded on a spiral hold-out, shown in longitudinal section.

The outer tube 20, together with the barrier layer 18 and the electrical shielding 16, can be configured so that it preferably folds down, as is further illustrated with reference to Fig. 2. In the variant which can be folded down, the hold-out is half as long as in the variant which cannot be folded down, and the sleeve takes less time to install.

Fig. 2 shows a longitudinal section through the coupling sleeve 10 in which the tubular supporting element 12 can be seen. Arranged around the supporting element 12 is the sleeve body 14 which, in turn, is surrounded by the electrical shielding 16. The barrier layer 18 around the copper gauze is in turn surrounded by the outer wall 20.

It can be clearly seen here that the electrical shielding 16, the barrier layer 18 and the outer tube 20 are folded back to facilitate the joining of the cable ends. As soon as this join has been produced, the electrical shielding 16, the barrier layer 18 and the outer tube 20 can be re-folded over the sleeve body 14 to then close the sleeve 10. In the case of the all-in-one sleeve, there is no longitudinal seam through which the water vapour could enter.

It can be seen in Fig. 3 that the barrier layer 18 can be closed in tubular form at both ends, for example by cable binders, adhesive tape or rubber sealing rings.

Fig. 4 shows an example in which the barrier layer is not provided in tubular form, but is used for enveloping the sleeve. In order to ensure the water tightness, sealing tape or mastic 42 can be provided on the edges.

Fig. 5 shows that the electrical shielding 16 can consist of a layer of, for example copper gauze. However, the electrical shielding can also consist of a metal foil wound round in multiple layers, which increases the flexibility of the sleeve.

The metallic layers can also be configured to be capable of carrying a current. In this case, a defined minimum cross section is necessary. Since in that case, the deformation behaviour becomes unfavourable in a layer, a thin foil or a copper gauze can be wound in many layers or two of the mentioned tubes can be used one over the other.

The example illustrated in Fig. 6 shows that the barrier layer can be positioned on one or both sides of the electrical shielding. This protects the sleeve body and also the outer tube from possibly sharp parts of the electrical shielding, which preferably consists of copper braid. The barrier layer thus acts as a shock absorber and prevents the outer tube from splitting when laid in the ground and when there are sharp stones in the earth.

Instead of having a copper braid as an additional layer in the construction of the sleeve, in the embodiment of Fig. 7, the reduced-water-permeability plastics material of the barrier layer is metallised. In Fig. 7, this has been carried out from the inside. This means that the reduced-water-permeability plastics material layer of the barrier layer has an inner coating of metal or metal gauze or has a metal coating on the inside which is located over the sleeve body.

In the example of Fig. 8, there are the possibilities of either applying the water-tight plastics material layers of the barrier layer 82 externally around a foamed material 84 or soft elastomer, or applying the water-tight plastics material layers of the barrier layer 88 on the inside. In both cases, embedded into the foamed material is the copper gauze of the electrical shielding which protects outwardly as well as inwardly. This electrical bedding layer reduces a splitting effect of the outer tube and reduces deformations of the sleeve body when there is a relatively great earth pressure.

In Fig. 25, it is shown in longitudinal section that a thick-walled reduced-permeation tube 20 can also have an integrated copper gauze. In this case, the tube with integrated copper gauze has already been pre-expanded onto the spiral hold-out.

The use of soft rubber materials, silicone or EPDM, in Shore hardnesses of A5 to A30, preferably from A10 to A20 is advantageous over a foaming, as this is compressed under the great radial pressure of the outer tube. A soft rubber cannot be compressed.

Fig. 9 shows the possibility of having the water-tight plastics material layer of the barrier layer 92 on the outside, and therein the foamed material 94 or soft elastomer which, in turn, has the copper gauze of the electrical shielding 96 on the inside. This ensures the metallic contact to the conductive layer of the sleeve body.

Fig. 10 shows a further example in which there are located at both ends of the external sleeve regions 110 in which the plastics material coating has been removed to ensure an improved electrical contacting. This plastics material coating is optionally thick-walled to be able to act as a cushion or shock absorber. In this case as well, the reduced-water-permeability foil of the barrier layer 104 is applied onto the metallic layer 102. It is also possible for a metallic element 108, for example a copper wire, to be embedded in the thick-walled plastics material coating 106. This metallic element 108 requires a specific cross section in order to transmit electrical currents.

Fig. 11 again shows an optionally thick-walled plastics material coating 116 which can act as a cushion or shock absorber. Located on the inside of this plastics material coating 116 is the metallic layer 112, which is configured in this case as an undulating profile. This is advantageous for radial expansion, since it simplifies this or even allows it. As an option, an additional plastics material layer would also be possible on the inside of this metallic layer which is configured in an undulating profile and acts as an additional cushion.

The wall thickness of the bedding and shock absorber layer described above should be from 1 to 8 mm, preferably from 3 to 4 mm.

All the drawings of the new external sleeves generally show these as a compilation. A person skilled in the art will recognise that the layers can also be produced separately for the most part and then laid/bonded/welded/partially joined.

The re-jacketing can be supplied as a separate element to the customer who then for his part combines this with sleeves optionally produced by other manufacturers. However, the re-jacketing film can also be integrated into the supplied sleeve, for example a cold shrink sleeve on hold-out.

The solutions described above make it possible to reduce the permeation by a factor of at least 10. To illustrate the specific numbers for the water vapour permeability, said water vapour permeability is shown in Fig. 12 against the foil thickness. Further values of the water vapour permeability are provided in Figs. 13, 14 and 15.

In detail, Fig. 12 shows the water vapour permeability of various materials as a function of the foil thickness at 23 ° C. It is possible to read from this Figure, for example that CTA and PVC-P are more permeable to water vapour than PP-O and PVDC. Thus, Fig. 12 can be consulted in order to select a suitable material for the barrier layer.

Fig. 13 shows the oxygen and water vapour barrier values of current plastics materials. The data was determined at 70 % relative humidity on 25 µm thick foils under standard conditions. It can be seen from this Figure that, for example PE-HD and PP 6.6 are much more permeable to oxygen than the other mentioned plastics materials and that PA 6.6 and PAN are much more permeable to water vapour than the other plastics materials shown. This Figure can in turn be helpful in selecting suitable plastics materials for the barrier layer.

In a somewhat different form of presentation, Fig. 14 shows the oxygen and water vapour permeability of selected polymers. This Figure shows, for example, that rigid PVC is less permeable to water vapour than soft PVC and also allows the passage of less oxygen. Again, this diagram is helpful in selecting suitable materials for the barrier layer.

Fig. 15 shows the temperature dependency of the diffusion coefficient for PA 6, 12 and 66 in a logarithmic graph. It can be clearly seen from this Figure that the diffusion coefficient increases exponentially with the temperature. This Figure is helpful in demonstrating the principle of the diffusion coefficient.

### LIST OF REFERENCE NUMERALS

- 10: coupling sleeve
- 12: supporting body
- 14: sleeve body
- 16: electrical shielding
- 18: barrier layer
- 20: outer tube
- 42: adhesive strip
- 62: barrier layer
- 64: electrical shielding
- 66: barrier layer
- 72: electrical shielding
- 74: barrier layer
- 82: barrier layer
- 84: foamed material
- 86: electrical shielding
- 88: barrier layer
- 92: barrier layer
- 94: foamed material
- 96: electrical shielding
- 102: metallic layer
- 104: barrier layer
- 106: thick-walled plastics material coating
- 108: metallic element
- 110: regions at the end of the sleeve
- 112: metallic layer
- 116: thick-walled plastics material coating

## Claims

1. External sleeve (10) for joining two or more cable ends and for recreating a cable shielding, comprising:
a sleeve body (14);
an electrically conducting shielding layer (16) arranged along the outside of the sleeve body; and
an outer wall (20) arranged along the outside of the shielding layer; and
a barrier layer (18) having a permeability factor, as a result of which the penetration of fluids is reduced, the barrier layer being arranged along the inside of the outer wall (20);
**characterized in that**
the barrier layer consists of multilayered plastics material.

2. External sleeve (10) according to claim 1, wherein a tubular supporting body (12) having an opening into which the cable ends can be introduced, is arranged along the inside of the sleeve body (14).

3. External sleeve (10) according to claim 1, wherein the external sleeve (10) is a single-piece assembly.

4. External sleeve (10) according to any one of the preceding claims, wherein the external sleeve (10) is applied to a cold shrink tube.

5. External sleeve (10) according to claim 1, wherein the external sleeve (10) is applied to an outer tube provided in the winding, water shrinkage or slip-on methods.

6. External sleeve according to any one of claims 1 to 5, wherein the shielding layer is integrated into the barrier layer.

7. External sleeve according to any one of claims 1 to 5, wherein the barrier layer is arranged radially under or over the shielding layer.

8. External sleeve according to any one of claims 1 to 7, wherein the barrier layer consists of a metal layer and/or has a metal coating.

9. External sleeve according to any one of claims 1 to 8, wherein the barrier layer comprises at least one layer of fluorinated plastics material to reduce the permeability to fluids.

10. External sleeve according to any one of the preceding claims, wherein the barrier layer is adapted to be wound.

11. External sleeve according to any one of the preceding claims, wherein the shielding layer consists of copper gauze of full-surface metal foil or at least one wire.

12. External sleeve according to any one of the preceding claims, wherein the shielding layer consist of at least two metal foils to increase the flexibility of the deformability.

13. External sleeve according to any one of the preceding claims, wherein the shielding layer is formed as an undulating profile to facilitate radial expansion.

14. Method for the production of an external sleeve for joining two or more cable ends, comprising the following steps: forming a sleeve body; arranging an electrically conducting shielding layer along the outside of the sleeve body; arranging a barrier layer consisting of multilayered plastics material and having a permeability factor, as a result of which the penetration of fluids is impeded, the barrier layer being arranged along the inside of an outer wall; and arranging the outer wall along the outside of the barrier layer.

## Patentansprüche

1. Außenhülse (10) zum Verbinden von zwei oder mehr Kabelenden, um eine Kabelabschirmung wiederzuerstellen, wobei die Hülse Folgendes umfasst:
einen Hülsenkorpus (14),
eine elektrisch leitende Abschirmungsschicht (16), die entlang der Außenseite des Hülsenkorpus angeordnet ist,
eine Außenwand (20), die entlang der Außenseite der Abschirmungsschicht angeordnet ist, und
eine Sperrschicht (18), die einen Durchlässigkeitsfaktor hat, im Ergebnis dessen das Eindringungsvermögen von Fluiden verringert wird, wobei die Sperrschicht entlang der Innenseite der Außenwand (20) angeordnet ist,
**dadurch gekennzeichnet, dass**
die Sperrschicht aus einem mehrschichtigen Kunststoffmaterial besteht.

2. Außenhülse (10) nach Anspruch 1, wobei ein röhrenförmiger Stützkorpus (12), der eine Öffnung hat, in welche die Kabelenden eingeführt werden können, entlang der Innenseite des Hülsenkorpus (14) angeordnet ist.

3. Außenhülse (10) nach Anspruch 1, wobei die Außenhülse (10) eine einteilige Baugruppe ist.

4. Außenhülse (10) nach einem der vorhergehenden Ansprüche, wobei die Außenhülse (10) auf einen Kaltschrumpfschlauch aufgebracht wird.

5. Außenhülse (10) nach Anspruch 1, wobei die Außenhülse (10) auf einen Außenschlauch aufgebracht wird, der bei den Wickel-, Wasserschrumpf- oder Aufsteckverfahren bereitgestellt wird.

6. Außenhülse nach einem der Ansprüche 1 bis 5, wobei die Abschirmungsschicht in die Sperrschicht integriert ist.

7. Außenhülse nach einem der Ansprüche 1 bis 5, wobei die Sperrschicht in Radialrichtung unter oder über der Abschirmungsschicht angeordnet ist.

8. Außenhülse nach einem der Ansprüche 1 bis 7, wobei die Sperrschicht aus einer Metallschicht besteht und/oder eine Metallbeschichtung aufweist.

9. Außenhülse nach einem der Ansprüche 1 bis 8, wobei die Sperrschicht wenigstens eine Schicht eines fluorierten Kunststoffmaterials umfasst, um die Durchlässigkeit für Fluide zu verringern.

10. Außenhülse nach einem der vorhergehenden Ansprüche, wobei die Sperrschicht dafür eingerichtet ist, gewickelt zu werden.

11. Außenhülse nach einem der vorhergehenden Ansprüche, wobei die Abschirmungsschicht aus Kupfergaze aus vollflächiger Metallfolie oder wenigstens einem Draht besteht.

12. Außenhülse nach einem der vorhergehenden Ansprüche, wobei die Abschirmungsschicht aus wenigstens zwei Metallfolien besteht, um die Flexibilität der Verformbarkeit zu steigern.

13. Außenhülse nach einem der vorhergehenden Ansprüche, wobei die Abschirmungsschicht als ein wellenförmiges Profil geformt ist, um eine Ausdehnung in Radialrichtung zu erleichtern.

14. Verfahren zur Herstellung einer Außenhülse zum Verbinden von zwei oder mehr Kabelenden, das die folgenden Schritte umfasst: das Formen eines Hülsenkorpus, das Anordnen einer elektrisch leitenden Abschirmungsschicht entlang der Außenseite des Hülsenkorpus, das Anordnen einer Sperrschicht, die aus einem mehrlagigen Kunststoffmaterial besteht und einen Durchlässigkeitsfaktor hat, im Ergebnis dessen das Eindringen von Fluiden verhindert wird, wobei die Sperrschicht entlang der Innenseite einer Außenwand angeordnet ist, und das Anordnen der Außenwand entlang der Außenseite der Sperrschicht.

## Revendications

1. Manchon extérieur (10) pour réunir deux ou plus de deux extrémités de câble et pour recréer un blindage de câble, comprenant:
un corps de manchon (14);
une couche de blindage électroconductrice (16) mise en place le long du corps de manchon, à l'extérieur; et
une paroi extérieure (20) mise en place le long de la couche de blindage, à l'extérieur; et
une couche barrière (18) présentant un facteur de perméabilité qui a pour résultat une réduction de la pénétration des fluides, la couche barrière étant mise en place le long de la paroi extérieure (20), à l'intérieur;
**caractérisé en ce que**
la couche barrière est formée d'une matière plastique multicouches.

2. Manchon extérieur (10) selon la revendication 1, dans lequel un corps de support tubulaire (12) pourvu d'une ouverture dans laquelle les extrémités de câble peuvent être introduites est mis en place le long du corps de manchon (14), à l'intérieur.

3. Manchon extérieur (10) selon la revendication 1, dans lequel le manchon extérieur (10) est un ensemble en une seule pièce.

4. Manchon extérieur (10) selon l'une quelconque des revendications précédentes, dans lequel le manchon extérieur (10) est appliqué sur un tube rétractable à froid.

5. Manchon extérieur (10) selon la revendication 1, dans lequel le manchon extérieur (10) est appliqué sur un tube extérieur fourni dans les méthodes d'enroulement, de retrait à l'eau ou de glissement.

6. Manchon extérieur selon l'une quelconque des revendications 1 à 5, dans lequel la couche de blindage est intégrée dans la couche barrière.

7. Manchon extérieur selon l'une quelconque des revendications 1 à 5, dans lequel la couche barrière est mise en place radialement sous ou par-dessus la couche de blindage.

8. Manchon extérieur selon l'une quelconque des revendications 1 à 7, dans lequel la couche barrière est formée d'une couche métallique et/ou est pourvue d'un revêtement métallique.

9. Manchon extérieur selon l'une quelconque des revendications 1 à 8, dans lequel la couche barrière comprend au moins une couche de matière plastique fluorée pour réduire la perméabilité aux fluides.

10. Manchon extérieur selon l'une quelconque des revendications précédentes, dans lequel la couche barrière est adaptée pour être enroulée.

11. Manchon extérieur selon l'une quelconque des revendications précédentes, dans lequel la couche de blindage est formée d'un treillis de cuivre constitué d'une feuille métallique pleine surface ou d'au moins un fil.

12. Manchon extérieur selon l'une quelconque des revendications précédentes, dans lequel la couche de blindage est formée d'au moins deux feuilles métalliques pour augmenter la flexibilité de la déformabilité.

13. Manchon extérieur selon l'une quelconque des revendications précédentes, dans lequel la couche de blindage est formée en tant que profil ondulé pour faciliter l'expansion radiale.

14. Procédé de production d'un manchon extérieur pour réunir deux ou plus de deux extrémités de câble, comprenant les étapes suivantes: formation d'un corps de manchon; mise en place d'une couche de blindage électroconductrice le long du corps de manchon, à l'extérieur; mise en place d'une couche barrière formée d'une matière plastique multicouches et présentant un facteur de perméabilité, ce qui empêche la pénétration de fluide, la couche barrière étant mise en place le long d'une paroi extérieure, à l'intérieur; et mise en place de la paroi extérieure le long de la couche barrière, à l'extérieur.
